Europäisches Patentamt

European Patent Office

Office européen des brevets

(11) Publication number: **0 362 182**
**A2**

# (12) EUROPEAN PATENT APPLICATION

(21) Application number: **89870139.6**

(22) Date of filing: **25.09.89**

(51) Int. Cl.5: **G03B 15/00**

(30) Priority: **26.09.88 BE 8801097**

(43) Date of publication of application:
**04.04.90 Bulletin 90/14**

(84) Designated Contracting States:
**BE CH DE FR GB LI NL**

(71) Applicant: **AESTHEDES N.V.**
**Lammerdries 15**
**B-2440 Geel(BE)**

(72) Inventor: **Claessens, Dominique**
**Am Dürsbach 341**
**CH-6390 Engelberg(CH)**

(74) Representative: **Claeys, Pierre et al**
**Bureau Gevers rue de Livourne 7 bte 1**
**B-1050 Bruxelles(BE)**

(54) **A method and a device for registering information on a carrier of photographic material.**

(57) A method and a device for registering information on a carrier made of photographic material, wherein the information stored as digital data in a memory (4, 6) is converted into analogous information and is thereafter registered on said carrier for reproduction in a format of at least 40 x 40 cm, but preferably more than 1 x 1 m, wherein after conversion into analogous information a print is made of the information by means of a printing member (10) on a further carrier, said reproduction having a resolution of at least 250 points per inch, thereafter being started therefrom for registering said information on said carrier.

13

14

Fig.2.

Fig.1.

EP 0 362 182 A2

## A method and a device for registering information on a carrier of photographic material.

The invention relates to a method for registering information on a carrier of photographic material, wherein the information stored as digital data in a memory is converted into analogous information and is thereafter registered on the carrier for reproduction in a format of at least 40 x 40 cm, but preferably more than 1 x 1 cm.

Such a method is i.a. known for the manufacturing of advertising boards. Starting from a picture of for example the product to be advertised, there is, by using a computer and picture composition programs, realised on a display screen a picture which then forms the content of for example that advertising board. That picture can contain as well photographic material, lines as text. In order to manipulate that picture by means of a computer, the information thereof is digitally stored in a picture memory, for example a RAM, a floppy disk, a magnetic tape or another recording medium. In order to manufacture the final product, the digital information is converted into analogous information and registered on a carrier made of photographic material, such as for example a diapositive or the negative of a film. Therefore use is made of digital photorecording devices wherein, by means of controlling a light source and under control of the stored information, the negative of a picture or a diapositive is made. The carrier is then used for making an enlarged reproduction of the information registrated thereon (photoprints or diapositive projection).

A drawback of the known method is that especially for larger carriers (more than 1 x 1 m) the resolution of the thus obtained picture is moderate. In particular the outlines of lines such as letters and digits are not sharp. The cause thereof is that the maximum obtainable resolution is limited by as well the format of the photographic material as by the minimum dimensions of the used light source. If a higher resolution is required, use should be made of laser plotters, which at this moment are not available on the market.

It is an object of the invention to realize a method wherein a better resolution is obtained on an economical reachable way.

Therefore a method according to the invention is characterized in that after conversion into analogous information, a print is made of the information by means of a printing member on a further carrier, which reproduction has a resolution of at least 250 points per inch, thereafter being started therefrom for registering said information on said carrier. By now first making a print on a further carrier, one is no longer bound to the maximum dimension of the photographic material which has as a consequence that the dimension of the used light source no longer forms a problem. The use of the printing member enables a higher resolution for the reproduction of the digital stored information. That reproduction of good quality is then particularly suitable to be photographed. Such a printing member is further substantialy cheaper than a photoplotter (approximately one fifth of the price of a photoplotter), which offers an economically more attractive solution.

A preferred embodiment of a method according to the invention is characterized in that the information to be reproduced is corrected for manufacturing said print on said further carrier. Therethrough i.a. the color quality of the reproduction made by means of the printing member is further improved.

The invention also relates to a device for application of the method according to the invention.

A device according to the invention is characterized in that the data processing unit is connected to a printing member for manufacturing said print of the information on said further carrier.

The invention will now be described by means of the drawings. It will be clear that the invention is not limited to the embodiment shown in the drawing and within the scope of the invention several alternative embodiments are possible. In the drawing :

Figure 1 shows a block diagram of an example of a device for making a picture on the basis of information stored in a memory ;

Figure 2 shows an illustration of making a photo of said picture ;

Figure 3 schematically shows the steps of a method according to the invention.

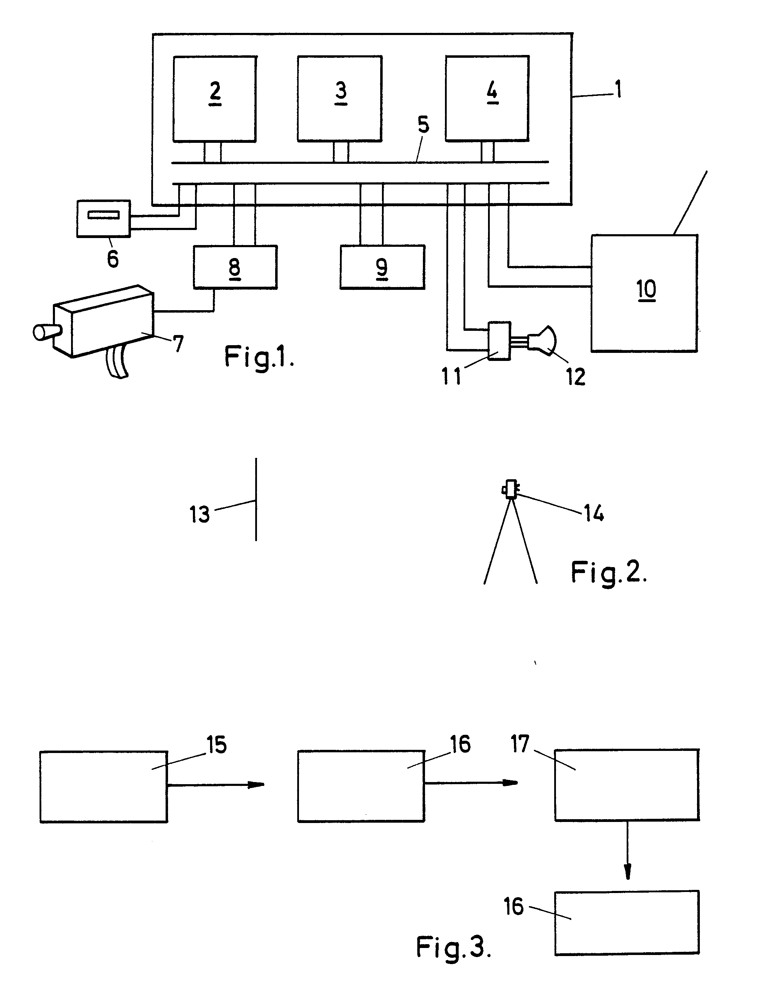

The device shown in Figure 1 comprises a data processing unit 1 which is provided with a bus 5 on which a microprocessor 2, a ROM 3 and a RAM 4 are connected. External members such as a reading member 6, for example a floppy disk reader, a printing member or printer 10, a keyboard control member 9, a video-control member 11 on which a display tube 12 is connected, even as an input/output interface 8 are connected to the bus. A camera 7, for example a video-camera, is connected with the interface 8. It will be clear that this is only given by way of example and that it is possible to connect further elements to the bus such, as for example, a scanner or a disk memory (back-up store, hard disk).

Programs are stored in the ROM 3 which enable the device to manipulate information originating from the external members 6, 8 or 9, and display it by means of the elements 10 and/or 12.

Such programs are generally indicated by the general name CAD (Computer Aided Design). The capacity of the RAM 4 is chosen in function of the desired accuracy for the image to be reproduced. That capacity can reach more than 8 Mbytes.

When a picture has to be composed, for example for an advertising board, a recording of an object and/or a person, is made for example by means of a video-camera 7. That picture is digitalised, for example by means of an A/D convertor, and thereafter stored in the RAM 4 or on a floppy disk. Further text originating from the keyboard 9 is also stored in the RAM or in a floppy disk. Further it is also possible by means of algorithms to determine all kind of figures or outlines. Starting from all those data the composition of the picture can now be realized. Hereby several methods are possible. Beside the composition of picture elements, such as objects, backgrounds, persons, animals, or text, it is also possible to apply to the picture all kind of manipulations relating to the color, the brightness, the contrast, the outlines, etc. Those are all CAD technics known on their own. During the creation process of the picture, the latter is substantially continuously represented on the display screen 12, in order to follow the evolution of the creation. When the desired picture is now composed, the picture information is stored in the RAM 4 or in a floppy disk.

By the known method, the digital stored picture information is used for controlling a light source, generally a laser, of a photorecording member. Hereby a carrier, manufactured of photographic material, for example a film (negative) or a diapositive is directly exposed by means of that light source.

By the method (figure 3) and device according to the invention, the digital stored picture information (15) is now used to control a printer 10 which makes (16) a reproduction, preferably in colours, of the composed picture. That printer is a high quality printer, preferably in inkjet or a thermal printer with possibility of sublimation. That printer must have a high resolution, at least 250 points (dots) per inch, but preferably more points per inch for photographic material and still more points per inch for lines. The representation of the digital picture is now realised on a further carrier, preferably a carrier of high quality paper, which has the appropriate dimension for the desired resolution. By making a reproduction on a further carrier at least one resolution limiting factor is eliminated, i.e. the writing thickness of the light source which is necessary for making digital photographic reproductions. Indeed, the further carrier is not bound on thos maximum dimensions as is the case with photographic material which is bound to a maximum dimension of 4 to 5 inches. Due to the fact that the further carrier is not bound to those maximum dimensions, it is possible to make a print with a much larger format whereby sufficient digital resolution can be obtained. Writing with a light source, such as for example a laser, on photographic material could be compared with writing with a pen on a piece of paper, when the pen has a thickness of 1 mm it is impossible to draw a line of 0,01 mm with that pen. However, when a 100 times as big paper sheet is used, a line with 0,01 mm thick can then be represented with a correct scale factor by using a pen of 1 mm thickness.

The use of a printer 10 further offers the possibility, on the one hand, in function of the quality of the further carrier and, on the other hand, in function of the characteristics of the used printer, to apply corrections, such as colour corrections or outline corrections. Those corrections then allow to improve still further the quality of the reproduction. The correction consists for example in eliminating the spectral differences between, on the one hand, the pigments used for making the print on the further carrier and, on the other hand, the pigments of the used photographic material. By using photographic material such as negative films or diapositives, the problem occurs that, with respect to their sensibility, their pigments react differently than does the human eye. The consequence thereof is that an erroneous colour is seen by the human eye by looking to a photographic picture. So, a colour which would for example be perceived as light brown by a human eye could be registered as red by the photographic material. Those spectral differences between pigments can be determined or calculated. By knowing that the used photographic material will react in a particular way to a pigment used for making the reproduction on the further carrier, this can be taken into account in such a manner that the final obtained product, i.e. the photographic reproduction will have the correct colour. For that purpose the reproduction made on the further carrier will have "corrected" pigments, i.e. the colours will be somewhat different in order to obtain the correct colour on the photographic picture. For example by applying a $\gamma$-correction to the reproduction on the further carrier, the final result on the photographic reproduction will have the correct colour as perceived by the human eye.

When that reproduction has now been made on a further carrier, it is used to make therefrom a photograph or a diapositive (17, figure 3). For that purpose the reproduction made on the further carrier is fixed for example on a holder 13 and a picture thereof is made, for example by means of a photocamera 14, on a carrier manufactured of photographic material. That picture is now realised under excellent exposure circumstances, eventually by making use of colour correction filters, and provides very sharp pictures of high quality. On the basis of the thus obtained recordings (negative or positive) on a carrier manufactured of photographic material it is now possible to make several copies of that recording 16 which are suitable to be represented on a large format (Ao).

By application of the method according to the invention a reproduction on a large format is realised, starting from a photographic carrier, whereby that reproduction has a high resolution. By introducing that intermediate step wherein use is made of a print on a further carrier, there is realised an economically very attractive solution, because that solution offers a substantial resolution improvement without making use of expensive photoplotters.

## Claims

1. A method for registering information on a carrier made of photographic material, wherein the information stored as digital data in a memory (4,6) is converted into analogous information and is thereafter registered on said carrier for reproduction in a format of at least 40 x 40 cm, but preferably more than 1 x 1 m, characterized in that after conversion into analogous information a print is made of the information by means of a printing member (10) on a further carrier, said reproduction having a resolution of at least 250 points per inch, thereafter being started therefrom for registering said information on said carrier.

2. A method as claimed in claim 1, characterized in that the information to be reproduced is corrected for manufacturing said print on said further carrier.

3. A method as claimed in claim 2, characterized in that said correction is applied by taking into account the kind of the further carrier.

4. A method as claimed in claim 2 or 3, characterized in that said correction is applied by taking into account a spectral difference between pigments of the carrier and the further carrier.

5. A device for realizing the method as claimed in anyone of claims 1 to 4, which device comprises a data processing unit (1) provided with a memory (4,6) for storing said information as digital data and with conversion means for converting said digital data, which device is further provided with photographic means (14) for registering said information, characterized in that the data processing unit is connected to a printing member (10) for manufacturing said print of the information on said further carrier.

6. A device as claimed in claim 5, characterized in that said device comprises correction means for applying a correction by taking into account a spectral difference between pigments of the carrier and the further carrier.

7. Printing member to be used in a device as claimed in claim 5 or 6, characterized in that the printing member is formed by a printer having a resolution of at least 250 points per inch.

Fig.1.

Fig.2.

Fig.3.